# EUROPEAN PATENT SPECIFICATION

(11) **EP 1 228 310 B1**
(45) Date of publication and mention of the grant of the patent: **02.05.2007**
(21) Application number: 00972950.0
(22) Date of filing: 01.11.2000
(51) Int. Cl.: F03D 11/04, E02B 17/04

(54) **METHOD AND SYSTEM FOR INSTALLING AND TRANSPORTING AN OFFSHORE WIND POWER STATION AT SEA**
METHODE UND EINRICHTUNG ZUM TRANSPORT UND ZUM AUFBAU EINER WINDENERGIEANLAGE AUF SEE
PROCEDE ET APPAREIL PERMETTANT D'INSTALLER ET DE TRANSPORTER UNE STATION D'ENERGIE EOLIENNE EN MER

(30) Priority: 11.11.1999 FI 992434
(43) Date of publication of application: 07.08.2002
(73) Proprietor: Rinta-Jouppi, Yrjö, 28760 Pori (FI)
(72) Inventor: RINTA-JOUPPI, Yrjö, FIN-28760 Pori (FI); FAGERSTRÖM, Asko, FIN-28660 Pori (FI)
(74) Representative: Tanskanen, Jarmo Tapio
(86) International application number: PCT/FI2000/000951
(87) International publication number: WO 2001/034977

(56) References cited:
- WO-A1-99/43956
- GB-A- 2 225 365
- GB-A- 2 327 449
- GB-A- 2 327 970

## Description

The present invention relates to a method as defined in the preamble of claim 1. Moreover, the invention relates to a system as defined in the preamble of claim 7. In addition, the invention relates to an offshore wind power station as defined in the preamble of claim 11.

Such a method for installing an offshore wind power station at sea is known from specification GB 2327449. The wind power station comprises a wide base and a tower extending vertically from the base and carrying a wind rotor mounted on its top. In the installation method presented in the above-mentioned specification, the tower and the base of the wind power station are transported as a single assembly by using a floating frame, e.g. barges, fastening the base to the bottom surface of the barge, transporting it to the place of installation and then lowering it to the sea bottom using means provided on the floating frame, such as chains, wire cables, a lever jack or the like. The floating frame can then be used for the installation of other corresponding base-tower combinations.

A problem with this prior-art method is that the load capacity of the floating frame used for installation has to be so designed that it will bear the weight of the base and tower in addition to its own weight. The resulting floating frame is very bulky and expensive. Besides, this specification completely neglects the occasional need to raise the wind power station from the sea bottom and transport it to land/ashore for servicing. With equipment built according to the specification, this would be difficult if not impossible because the base, which may be made of concrete or steel, must be very heavy to resist the stress exerted on the wind power station by the wind, sea currents, waves and ice. Therefore, the base is provided with ballast material of sand, stones or iron ore. Lifting such a load from the bottom requires a very high external hoisting capacity. Therefore, a special open sea crane ship would be needed for the hoisting operation.

The object of the invention is to eliminate the above-mentioned drawbacks.

GB-A-2 225 365 specifies the idea of providing water ballast tanks in the base and the tower of an offshore platform in general

A specific object of the invention is to disclose a method and system for the transportation of an offshore wind power station that will allow transportation without the transport vessel having to carry the weight of the wind power station at all.

A further object of the invention is to disclose a wind power station which can be easily transported back and forth between a place of installation and a place of maintenance and which can be raised and lowered independently in water without using any special hoisting equipment.

The features characteristic of the method, system and wind power station of the invention are presented in the claims below.

In the method of the invention, the wind power station is transported to a place of installation at sea by using a transport vessel and lowered to the sea bottom and/or raised from the sea bottom and transported to land/ashore by means of a transport vessel. According to the invention, the wind power station is lowered by adding ballast water into a ballast water tank provided in the wind power station, and the wind power station is raised by reducing the amount of ballast water in the ballast water tank.

In the system of the invention, the wind power station comprises a base to be mounted on the sea bottom, a tower attached to the base, and a transport vessel provided with a gripping device for gripping the wind power station and transporting the wind power station to a place of installation at sea and/or transporting it to land/ashore from the sea. According to the invention, the system comprises a ballast water tank disposed in the wind power station.

The offshore wind power station of the invention comprises a base to be mounted on the sea bottom, and a tower attached to the base. According to the invention, the wind power station comprises a ballast water tank.

Other preferred features and embodiments of the invention are presented in the subclaims below.

In the following, the invention will be described in detail by the aid of a few examples of its embodiments with reference to the attached drawing, wherein
Fig. 1 presents an embodiment of the wind power station of the invention in a diagrammatic side view and partly sectioned,
Fig. 2 - 7 present two different embodiments of the system of the invention and different stages in the procedure of the invention.

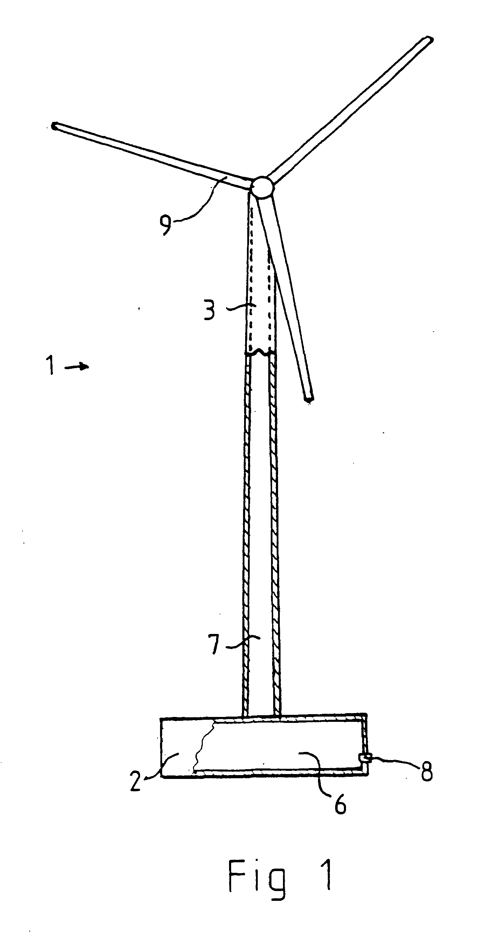

Fig. 1 presents a wind power station 1 according to the invention. It comprises a wide base 2 of e.g. a round slab-like shape, which can be set on the sea bottom. Further, the wind power station comprises a tower 3 attached to the base and extending vertically from it. Mounted on the upper end of the tower 3 is a wind rotor 9. The box-like base 2, which may be made of concrete or steel, is of a hollow construction and the space inside it functions as a ballast water tank or container 6. The tower 3 is likewise of a hollow construction and the space inside it serves as a ballast water tank 7. The interior spaces of the ballast water tanks 6, 7 in the base 2 and tower 3 may be separate spaces or they may communicate with each other. Moreover, the wind power station 1 may comprise a pump or pumps 8, by means of which it is possible to pump sea water into and out of the ballast water tanks 6, 7. The pump 8 may also be disposed on a transport or service vessel 4, in which case the wind power station need not necessarily be provided with ballast water pumps.

The buoyancy of the wind power station in water is so designed that the station is able to float and carry its own weight in water when the ballast water tanks 6, 7 are empty. Correspondingly, when the ballast water tanks 6, 7 are partially or completely filled with water, the wind power station will sink to the bottom.

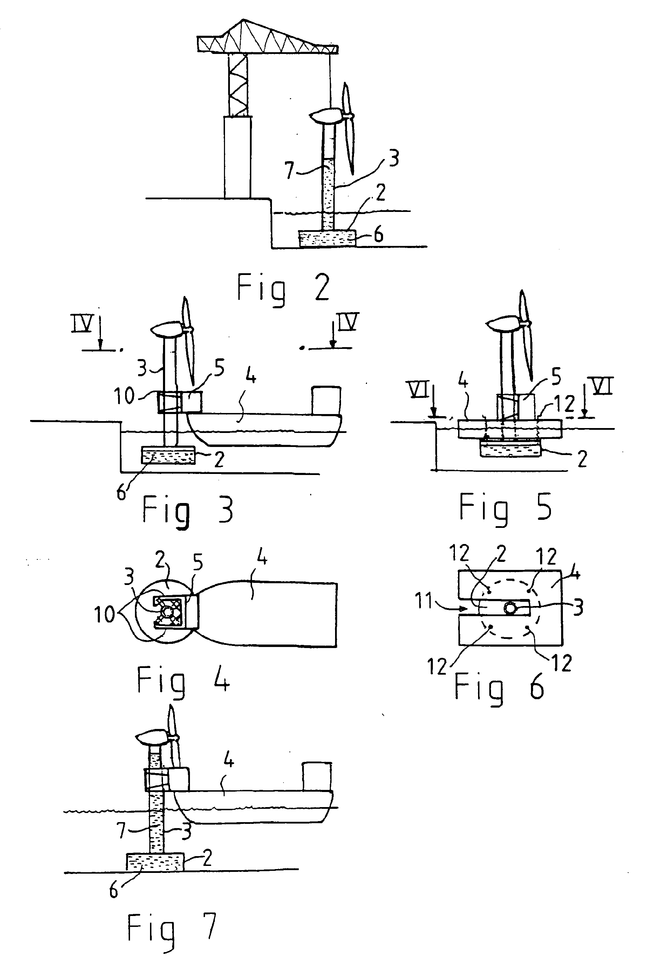

In Fig. 2, the base 2 and the tower 3 are assembled on land or ashore into a unitary whole by using a crane ashore. The base 2 can be floated separately to the place of installation and lowered onto a firm pedestal resting on the bottom by filling the ballast water tank 6 in the base. On the top of the base 2, a tower 3 is built from one or more parts. Water can also be pumped into the ballast water tank 7 in the tower to increase its firmness. Finally, a machine room and a wind rotor 9 are mounted on the end of the tower 3.

When the wind power station is to be transported to its place of installation at sea, as illustrated in Fig. 3 and 4, the amount of ballast water in the ballast water tanks 6 and 7 in the base 2 and in the tower 3 is so adjusted that the base 2 becomes buoyant and is lifted off the bottom. By adjusting the amount of ballast water in the tank 6, 7, the elevation and stability of the base in relation to the transport vessel 4 are adjusted to make them suitable for transportation. The tower 3 is gripped from a lateral direction from opposite sides by the gripping jaws 10 of a gripping device 5 mounted on the transport vessel, as illustrated in Fig. 4. The grip on the tower is preferably such that it permits movement of the tower in a vertical direction in relation to the transport vessel but not in other directions. The wind power station is then transported to its place of installation at sea.

Fig. 5 and 6 illustrate an alternative solution for implementing the transport vessel in Fig. 3 and 4. In Fig. 5 and 6, the transport vessel 4 used is a barge 4 having a forked frame with a through slot 11 extending from its middle to the edge, allowing the tower 3 to go through the slot. For transportation, the base 2 can be fastened in a substantially fixed manner to the barge 4. The upper surface of the base 2 lies against the bottom of the barge 4 and is fastened to it by suitable fastening elements 12, such as wire cables, chains, threaded bolts or the like.

Fig. 7 presents a phase in the procedure at which the wind power station has been brought to the place of installation and an amount of water sufficient to increase the weight so as to allow the base 2 to sink to the sea bottom has been pumped into the ballast water tank 6 of the base 2 and into the ballast water tank 7 of the tower 3.

Substantially the entire inside space of the tower 3 constituting the ballast water tank 7 can be filled with water. Providing a ballast water tank in the tower 3 in addition to the base 2, together with an appropriate design, enables the weight of the wind power station to be increased so that it can rest very firmly on the bottom and the wind power station is able to receive the loads generated by wind, sea currents, sea roll and ice, which tend to upset or move the wind power station. Furthermore, providing a ballast water tank 7 in the tower 3 makes it possible to use a base 2 of a relatively light and compact construction.

The base 2 can be provided with water jet equipment (not shown in the figures), by means of which the bottom, if it is e.g. of a sandy nature, can be dredged after the base has sunk against the bottom, thus making it possible to adjust the vertical alignment of the wind power station.

When the wind power station is to be brought ashore from the sea for maintenance, the procedure is naturally reverse to that for installation. The amount of water in the ballast water tanks 6, 7 of the wind power station 1 standing on the bottom is reduced until the buoyancy of the base 2 and tower 3 has lifted the station off the bottom and raised it to a level near the surface. Via the ballast water tank 6, 7, the elevation and stability of the wind power station are adjusted to make them suitable in relation to the transport vessel 4 used for transportation. The tower 3 is then gripped from opposite sides by the gripping device 5 of the transport vessel 4 and the wind power station is transported away from the place of installation to a place of maintenance.

The invention is not restricted to the examples of its embodiments described above; instead, many variations are possible within the scope of the inventive idea defined in the claims.

## Claims

1. Method for installing an offshore wind power station (1) at sea and/or transporting one from sea e.g. for maintenance, said wind power station comprising a base (2) to be mounted on the sea bottom, and a tower (3) attached to the base, which wind power station is transported to a place of installation at sea by means of a transport vessel (4) and lowered to the sea bottom and/or lifted off the sea bottom and transported to land/ashore by means of a transport vessel, **characterized in that** the wind power station is lowered by adding ballast water into a ballast water tank (6, 7) provided in the wind power station and that the wind power station is raised by reducing the amount of ballast water in the ballast water tank, the ballast water tank (6, 7) being so designed that the station is able to float and carry its own weight in water when the ballast water tank (6, 7) is empty, and correspondingly, when the ballast water tank (6, 7) is partially or completely filled with water, the wind power station will sink to the sea bottom.

2. Method as defined in claim 1, **characterized in that** vertical motion of the wind power station (1) in relation to the transport vessel (4) is permitted during the transportation.

3. Method as defined in claim 1 or 2, **characterized in that**, to install the wind power station at sea, the wind power station is gripped by a gripping device (5) mounted on the transport vessel (4); the elevation and stability of the wind power station are adjusted by the aid of the ballast water tank (6, 7) to make them suitable with respect to the transport vessel; the wind power station is transported to the place of installation at sea; and the wind power station is lowered at the place of installation to the sea bottom by filling the ballast water tank (6, 7).

4. Method as defined in claim 1 or 2, **characterized in that**, to transport the wind power station from sea, the amount of water in the ballast water tank (6, 7) is reduced until the wind power station has risen off the bottom to a level near the surface; using the ballast water tank (6, 7), the elevation and stability of the wind power station are adjusted to make them suitable in relation to the transport vessel (4); the wind power station is gripped by the gripping device (5) of the transport vessel (4); the wind power station is transported ashore from the place of installation, e.g. to a place of maintenance; and the wind power station is released from the grip of the transport vessel.

5. Method as defined in any one of claims 1 - 4, **characterized in that** a ballast water tank (6) disposed in the base (2) of the wind power station is used, and/or that a ballast water tank (7) disposed in the tower (3) of the wind power station is used.

6. Method as defined in any one of claims 1 - 5, **characterized in that** the tower (3) of the wind power station is gripped by the gripping device (5) of the transport vessel (4) from opposite sides.

7. System for installing an offshore wind power station (1) at sea and/or transporting one from the sea e.g. for maintenance, said wind power station comprising a base (2) to be set on the sea bottom, and a tower (3) attached to the base, and a transport vessel (4) provided with a gripping device (5) for gripping the wind power station to transport it to a place of installation at sea and/or from the sea to land/ashore, **characterized in that** the system comprises a ballast water tank (6, '7) disposed in the wind power station; and that the ballast water tank (6, 7) is so designed that the station is able to float and carry its own weight in water when the ballast water tank (6, 7) is empty, and correspondingly, when the ballast water tank (6, 7) is partially or completely filled with water, the wind power station will sink to the sea bottom.

8. System as defined in claim 7, **characterized in that** the system comprises a pump (8) disposed on the vessel (4) or on the wind power station (1) for pumping ballast water into/out of the ballast water tank (6, 7).

9. System as defined in claim 7 or 8, **characterized in that** the base (2) is provided with a ballast water tank (6) and/or that the tower (3) is provided with a ballast water tank (7).

10. System as defined in any one of claims 7 - 9, **characterized in that** the gripping device (5) of the transport vessel comprises gripping jaws (8) for gripping the tower (3) from a lateral direction from its opposite sides, said gripping jaws being designed to allow vertical motion of the tower in relation to the transport vessel (4).

11. Offshore wind power station comprising a base to be set on the sea bottom and a tower (3) attached to the base, **characterized in that** the wind power station comprises a ballast water tank (6, 7) being so designed that the station is able to float and carry its own weight in water when the ballast water tank (6, 7) is empty, and correspondingly, when the ballast water tank (6, 7) is partially or completely filled with water, the wind power station will sink to the sea bottom.

12. Offshore wind power station as defined in claim 11, **characterized in that** the base (2) is provided with a ballast water tank (6) and/or that the tower (3) is provided with a ballast water tank (7).

13. Offshore wind power station as defined in claim 11 or 12, **characterized in that** the wind power station (1) comprises a pump (8) for pumping ballast water into/out of the ballast water tank (6, 7).

## Patentansprüche

1. Verfahren zur Aufstellung einer Offshore-Windkraftanlage (1) auf See und/oder die Beförderung einer dieser vom Meer z.B. zur Instandhaltung der genannten Windkraftanlage, umfassend ein Fundament (2) zur Montage auf dem Meeresboden, und einen Turm (3), der an dem Fundament befestigt ist, die Windkraftanlage, welche mittels eines Transportbehälters (4) zu einem Aufstellungsort auf See befördert wird und zum Meeresboden abgesenkt und/oder vom Meeresboden angehoben wird und durch einen Transportbehälter an Land/zur Küste befördert wird,
**dadurch gekennzeichnet,**
**dass** die Windkraftanlage durch Hinzufügen von Ballastwasser in die Ballastwassertanks (6, 7), die in der Windkraftanlage vorgesehen sind, abgesenkt wird, und die Windkraftanlage durch Reduzieren der Menge an Ballastwasser im Ballastwassertank angehoben wird, mit dem Ballastwassertank (6, 7), der so ausgelegt ist, dass die Anlage schwimmen und ihr eigenes Gewicht im Wasser tragen kann, wenn der Ballastwassertank (6, 7) leer ist, und entsprechend,wenn der Ballastwassertank (6, 7) teilweise oder ganz mit Wasser gefüllt ist, die Windkraftanlage auf den Meeresboden sinken wird.

2. Verfahren wie in Anspruch 1 festgelegt,
**dadurch gekennzeichnet,**
**dass** vertikale Bewegung der Windkraftanlage (1) in Bezug auf den Transportbehälter (4) während des Transportes zulässig ist.

3. Verfahren wie in Anspruch 1 oder 2 festgelegt,
**dadurch gekennzeichnet,**
**dass**, um die Windkraftanlage auf See zu aufzustellen, wird die Windkraftanlage mittels einer Greifvorrichtung (5) gegriffen und auf einen Transportbehälter (4) montiert; die Höhenlage und die Stabilität der Windkraftanlage werden mit Hilfe des Ballastwassertanks (6, 7).angepasst, um sie bezüglich des Transportbehälters verwendbar zu machen; die Windkraftanlage wird zum Aufstellungsort auf See befördert; und am Aufstellungsort durch Füllen des Ballastwassertanks (6, 7) auf den Meeresboden abgesenkt.

4. Verfahren wie in Anspruch 1 oder 2 festgelegt,
**dadurch gekennzeichnet,**
**dass**, um die Windkraftanlage vom Meer zu befördern, die Wassermenge im Ballastwassertank (6, 7) reduziert wird, bis sich die Windkraftanlage vom Boden auf ein Niveau in der Nähe der Oberfläche gehoben hat; Unter Einsatz des Ballastwassertanks (6, 7), werden die Höhenlage und die Stabilität der Windkraftanlage angepasst, um sie in Bezug auf den Transportbehälter (4) verwendbar zu machen; die Windkraftanlage wird mit der Greifvorrichtung (5) des Transportbehälters gegriffen; die Windkraftanlage wird, z.B. an einen Ort zur Instandhaltung, vom Aufstellungsort an Land befördert; dann wird das Windkraftwerk von der Greifvorrichtung des Transportbehälters freigegeben.

5. Verfahren wie in jedem der Ansprüche 1 - 4 festgelegt,
**dadurch gekennzeichnet,**
**dass** ein Ballastwassertank (6) eingesetzt wird, der auf dem Fundament (2) der Windkraftanlage aufgestellt ist, und/oder, dass ein Ballastwassertank (7) eingesetzt wird, der im Turm (3) der Windkraftanlage aufgestellt ist.

6. Verfahren wie in jedem der Ansprüche 1 - 5 festgelegt,
**dadurch gekennzeichnet,**
**dass** der Turm (3) der Windkraftanlage von der Greifvorrichtung (5) des Transportbehälters, von gegenüberliegenden Seiten aus, gegriffen wird.

7. System zur Aufstellung einer Offshore-Windkraftanlage (1) auf See und/oder die Beförderung einer dieser vom Meer z.B. zur Instandhaltung der genannten Windkraftanlage, umfassend ein Fundament (2) zur Einrichtung auf dem Meeresboden, und einen auf dem Fundament aufgestellten Turm (3), und einen mit einer Greifvorrichtung (5) versehenen Transportbehälter (4), um die Windkraftanlage zu greifen und zum Aufstellungsort auf See und/oder vom Meer an Land/zur Küste zu befördern,
**dadurch gekennzeichnet,**
**dass** das System einen Ballastwassertank (6,7) umfasst, der in einer Windkraftanlage aufgestellt ist; und der Ballastwassertank (6, 7) so ausgeführt ist, dass die Anlage schwimmen und ihr eigenes Gewicht im Wasser tragen kann, wenn der Ballastwassertank (6, 7) leer ist, und entsprechend wenn der Ballastwassertank (6, 7) teilweise oder ganz mit Wasser gefüllt ist, die Windkraftanlage auf den Meeresboden sinken wird.

8. System wie in Anspruch 7 festgelegt,
**dadurch gekennzeichnet,**
**dass** das System eine Pumpe (8) umfasst, die auf dem Behälter (4) oder auf der Windkraftanlage (1) aufgestellt ist, um Ballastwasser in den/aus dem Ballastwassertank (6, 7) zu pumpen.

9. System wie in Anspruch 7 oder 8 festgelegt,
**dadurch gekennzeichnet,**
**dass** das Fundament (2) mit einem Ballastwassertank (6) versehen ist und/oder, dass der Turm (3) mit einem Ballastwassertank (7) versehen ist.

10. Verfahren wie in jedem der Ansprüche 7 - 9 festgelegt,
**dadurch gekennzeichnet,**
**dass** die Greifvorrichtung (5) des Transportbehälters die Klemmbacken (8) umfasst, um den Turm (3) von zwei Richtungen zweier gegenüberliegender Seiten aus zu greifen, und genannte Greifbacken so ausgeführt sind, um vertikale Bewegung des Turmes in Bezug auf den Transportbehälter (4) zuzulassen.

11. Offshore-Windkraftanlage, umfassend ein Fundament zur Einrichtung auf dem Meeresgrund, und einen auf dem Fundament befestigten Turm (3),
**dadurch gekennzeichnet,**
**dass** die Windkraftanlage einen Ballastwassertank (6, 7) umfasst, der so ausgeführt ist, dass die Anlage schwimmen und ihr eigenes Gewicht im Wasser tragen kann, wenn der Ballastwassertank (6, 7) leer ist, und entsprechend wenn der Ballastwassertank (6, 7) teilweise oder ganz mit Wasser gefüllt ist, die Windkraftanlage auf den Meeresboden sinken wird.

12. Offshore-Windkraftanlage wie in Anspruch 11 festgelegt,
**dadurch gekennzeichnet,**
**dass** das Fundament (2) mit einem Ballastwassertank (6) versehen ist und/oder, dass der Turm (3) mit einem Ballastwassertank (7) versehen ist.

13. Offshore-Windkraftanlage wie in Anspruch 11 oder 12 festgelegt,
**dadurch gekennzeichnet,**
**dass** die Windkraftanlage (1) eine Pumpe (8) umfasst, um Ballastwasser in den/aus dem Ballastwassertank (6, 7) zu pumpen.

## Revendications

1. Procédé permettant d'installer une station d'énergie éolienne au large (1) en mer et/ou d'en transporter une depuis la mer, par exemple pour la maintenance, ladite station d'énergie éolienne comprenant une base (2) à monter au fond de la mer, et une tour (3) fixée à la base, laquelle station d'énergie éolienne est transportée vers un site d'installation en mer au moyen d'un bâtiment de transport (4) et abaissée vers le fond de la mer et/ou soulevée du fond de la mer et transportée à terre au moyen d'un bâtiment de transport, **caractérisé en ce que** la station d'énergie éolienne est abaissée en ajoutant de l'eau de lestage dans un réservoir d'eau de lestage (6, 7) prévu dans la station d'énergie éolienne et **en ce que** la station d'énergie éolienne est soulevée en réduisant la quantité d'eau de lestage dans le réservoir d'eau de lestage, le réservoir d'eau de lestage (6, 7) étant conçu de manière à ce que la station soit capable de flotter et de porter son propre poids dans l'eau lorsque le réservoir d'eau de lestage (6, 7) est vide, et de façon correspondante, lorsque le réservoir d'eau de lestage (6, 7) est partiellement ou complètement rempli d'eau, la station d'énergie éolienne coule au fond de la mer.

2. Procédé selon la revendication 1, **caractérisé en ce que** le mouvement vertical de la station d'énergie éolienne (1) par rapport au bâtiment de transport (4) est possible pendant le transport.

3. Procédé selon la revendication 1 ou 2, **caractérisé en ce que**, pour installer la station d'énergie éolienne en mer, la station d'énergie éolienne est saisie par un dispositif de prise (5) monté sur le bâtiment de transport (4) ; l'élévation et la stabilité de la station d'énergie éolienne sont ajustées à l'aide du réservoir d'eau de lestage (6, 7) pour les adapter par rapport au bâtiment de transport; la station d'énergie éolienne est transportée vers le site d'installation en mer ; et la station d'énergie éolienne est abaissée sur le site d'installation vers le fond de la mer en remplissant le réservoir d'eau de lestage (6, 7).

4. Procédé selon la revendication 1 ou 2, **caractérisé en ce que**, pour transporter la station d'énergie éolienne depuis la mer, la quantité d'eau dans le réservoir d'eau de lestage (6, 7) est réduite jusqu'à ce que la station d'énergie éolienne soit soulevée du fond jusqu'à un niveau proche de la surface ; en utilisant le réservoir d'eau de lestage (6, 7), l'élévation et la stabilité de la station d'énergie éolienne sont ajustées pour les adapter par rapport au bâtiment de transport (4) ; la station d'énergie éolienne est saisie par le dispositif de prise (5) du bâtiment de transport (4) ; la station d'énergie éolienne est transportée à terre depuis le site d'installation, par exemple vers un site de maintenance ; et la station d'énergie éolienne est libérée de la prise du bâtiment de transport.

5. Procédé selon l'une quelconque des revendications 1 à 4, **caractérisé en ce qu'**un réservoir d'eau de lestage (6) disposé dans la base (2) de la station d'énergie éolienne est utilisé, et/ou **en ce qu'**un réservoir d'eau de lestage (7) disposé dans la tour (3) de la station d'énergie éolienne est utilisé.

6. Procédé selon l'une quelconque des revendications 1 à 5, **caractérisé en ce que** la tour (3) de la station d'énergie éolienne est saisie par le dispositif de prise (5) du bâtiment de transport (4) sur des côtés opposés.

7. Système permettant d'installer une station d'énergie éolienne au large (1) en mer et/ou d'en transporter une depuis la mer, par exemple pour la maintenance, ladite station d'énergie éolienne comprenant une base (2) à installer au fond de la mer, et une tour (3) fixée à la base, et un bâtiment de transport (4) muni d'un dispositif de prise (5) pour saisir la station d'énergie éolienne afin de la transporter vers un site d'installation en mer et/ou depuis la mer vers la terre, **caractérisé en ce que** le système comprend un réservoir d'eau de lestage (6, 7) disposé dans la station d'énergie éolienne; et **en ce que** le réservoir d'eau de lestage (6, 7) est conçu de manière à ce que la station soit capable de flotter et de porter son propre poids dans l'eau lorsque le réservoir d'eau de lestage (6, 7) est vide, et de façon correspondante, lorsque le réservoir d'eau de lestage (6, 7) est partiellement ou complètement rempli d'eau, la station d'énergie éolienne coule au fond de la mer.

8. Système selon la revendication 7, **caractérisé en ce que** le système comprend une pompe (8) disposée sur le bâtiment (4) ou sur la station d'énergie éolienne (1) pour pomper l'eau de lestage dans/hors du réservoir d'eau de lestage (6, 7).

9. Système selon la revendication 7 ou 8, **caractérisé en ce que** la base (2) est munie d'un réservoir d'eau de lestage (6) et/ ou **en ce que** la tour (3) est munie d'un réservoir d'eau de lestage (7).

10. Système selon l'une quelconque des revendications 7 à 9, **caractérisé en ce que** le dispositif de prise (5) du bâtiment de transport comprend des mâchoires de serrage (8) destinées à saisir la tour (3) depuis une direction latérale à partir de ses côtés opposés, lesdites mâchoires de serrage étant conçues pour permettre un mouvement vertical de la tour par rapport au bâtiment de transport (4).

11. Station d'énergie éolienne au large comprenant une base à installer au fond de la mer et une tour (3) fixée à la base, **caractérisée en ce que** la station d'énergie éolienne comprend un réservoir d'eau de lestage (6, 7) conçu de manière à ce que la station soit capable de flotter et de porter son propre poids dans l'eau lorsque le réservoir d'eau de lestage (6, 7) est vide, et de façon correspondante, lorsque le réservoir d'eau de lestage (6, 7) est partiellement ou complètement rempli d'eau, la station d'énergie éolienne coule au fond de la mer.

12. Station d'énergie éolienne au large selon la revendication 11, **caractérisée en ce que** la base (2) est munie d'un réservoir d'eau de lestage (6) et/ou **en ce que** la tour (3) est munie d'un réservoir d'eau de lestage (7).

13. Station d'énergie éolienne au large selon la revendication 11 ou 12, **caractérisée en ce que** la station d'énergie éolienne (1) comprend une pompe (8) pour pomper l'eau de lestage dans/hors du réservoir d'eau de lestage (6, 7).
